# EUROPÄISCHE PATENTSCHRIFT

(11) **EP 0 834 208 B1**
(45) Veröffentlichungstag und Bekanntmachung des Hinweises auf die Patenterteilung: **29.08.2001**
(21) Anmeldenummer: 97919353.9
(22) Anmeldetag: 14.04.1997
(51) Int. Cl.: H02B 13/035

(54) **SAMMELSCHIENENKUPPLUNG DURCH DIE BENACHBARTEN WÄNDE ZWEIER NEBENEINANDERSTEHENDER SCHALTFELDER**
BUSBAR CONNECTION THROUGH THE ADJACENT WALLS OF TWO ADJACENT SWITCHGEAR PANELS
COULAGE DE BARRES OMNIBUS A TRAVERS LES PAROIS ADJACENTES DE DEUX PANNEAUX DE COUPLAGE ADJACENTS

(30) Priorität: 19.04.1996 DE 19615553
(43) Veröffentlichungstag der Anmeldung: 08.04.1998
(73) Patentinhaber: ABB PATENT GmbH, 68309 Mannheim (DE)
(72) Erfinder: AUFERMANN, Albert, D-40882 Ratingen (DE)
(74) Vertreter: Rupprecht, Klaus, Dipl.-Ing.
(86) Internationale Anmeldenummer: EP9701851
(87) Internationale Veröffentlichungsnummer: WO9740563

(56) Entgegenhaltungen:
- DE-A- 4 312 261
- DE-A- 4 312 617
- DE-A- 4 315 730
- DE-U- 8 512 181

## Beschreibung

Die Erfindung betrifft eine Sammelschienenkupplung gemäß dem Oberbegriff des Anspruches 1.

Eine derartige Sammelschienenkupplung ist aus der DE 43 12 261 A bekannt geworden. Sie umfaßt zwei topfförmige Isolierkörper, die mit ihrem freien Rand gegen die Innenfläche der zugehörigen Schaltfeldwände gerichtet sind; innerhalb der beiden Isolierkörper befindet sich ein Kupplungsbolzen, der jeweils mit im Topfboden angeordneten und darin eingegossenen Kontaktstücken elektrisch leitend verbunden ist. An den Kontaktstücken befinden sich Anschlußstücke, an denen die Sammelschienen innerhalb des Schaltfeldes befestigt werden können. Zwischen dem Kupplungsbolzen und den Isolierkörpern befindet sich ein zylindrischer Kunststoffkörper, vorzugsweise aus Silikon, der zur Abdichtung dient.

Bei dieser Sammelschienenkupplung besteht das Problem, daß die Fixierung der beiden topfförmigen Isolierkörper an den Wänden relativ kompliziert ist. Die Fixierung erfolgt nämlich lediglich dadurch, daß die beiden Isolierkörper den Bereich des Bauelementes, der ins Innere der Schaltanlage hineinragt, in Abstand umgeben und die einzige Fixierung durch die beiden Rundschnurdichtungen beziehungsweise O-Ringe erfolgt. Eine starre Verbindung des Isolierkörpers mit der Schaltwand ist dadurch nicht gegeben.

Aufgabe der Erfindung ist es, eine Sammelschienenkupplung der eingangs genannten Art soweit zu verbessern, daß einerseits die Montage erleichtert und die Dichtigkeit andererseits verbessert sind. Weiterhin soll eine starre Fixierung des Isolierkörpers am Bauelement und damit an der Schaltfeldwand sichergestellt sein.

Diese Aufgabe wird ertindungsgemäß gelöst duch die Merkmael des Anspruches 1.

Erfindungsgemäß ist das an der Schaltfeldwand befestigte Bauelement in den freien Rand des anschließenden topfförmigen Isolierkörpers eingegossen.

Dadurch wird erreicht, daß eine starre und sichere Fixierung des Isolierkörpers bezogen auf die Schaltfeldwand besteht.

Der Dichtkörper zwischen dem Kupplungsbolzen und den Innenflächen der zugehörigen Isolierkörper ist zwischen den Bauteilen festgelegt.

Dabei besitzt gemäß einer besonderen Ausführungsform jedes Bauteil einen radialen Randbord, der in einer Öffnung in der zugehörigen Schaltfeldwand fixiert ist. Gemäß einer besonderen Ausführungsform ist das Bauteil darin vorzugsweise mittels einer Laserschweißung festgeschweißt.

Da die metallischen Bauelemente in den Isolierkörpern eingegossen und damit gasdicht darin aufgenommen sind und da darüberhinaus jedes Bauteil an der Schaltfeldwand festgeschweißt ist, ist in diesem Bereich eine absolute Dichtigkeit gegeben.

Eine weitere Ausführung der Erfindung kann durch die kennzeichnenden Merkmale des Anspruches 6 gegeben sein.

Bei dieser Anordnung ist ein Gewindering vorgesehen, mit dem der Isolierkörper zusammen mit der Armatur bzw. dem Bauteil gegen einen Gewindering unter Zwischenfügung einer Dichtung angepreßt ist, der in die zugehörige Öffnung jeder Schaltfeldwand eingesetzt ist.

Weitere vorteilhafte Ausgestaltungen und Verbesserungen sind den weiteren Unteransprüchen zu entnehmen.

Anhand der Zeichnung, in der zwei Ausführungsbeispiele der Erfindung dargestellt sind, sollen die Erfindung sowie weitere vorteilhafte Ausgestaltungen und Verbesserungen der Erfindung und weitere Vorteile näher erläutert und beschrieben werden.

Es zeigen:
- Fig. 1: eine Schnittansicht durch zwei Schaltfelder im Bereich der Kupplung, nach einer ersten Ausgestaltung, und
- Fig. 2: eine Schnittansicht ähnlich der der Fig. 1, und einer weiteren Ausgestaltung der Erfindung.

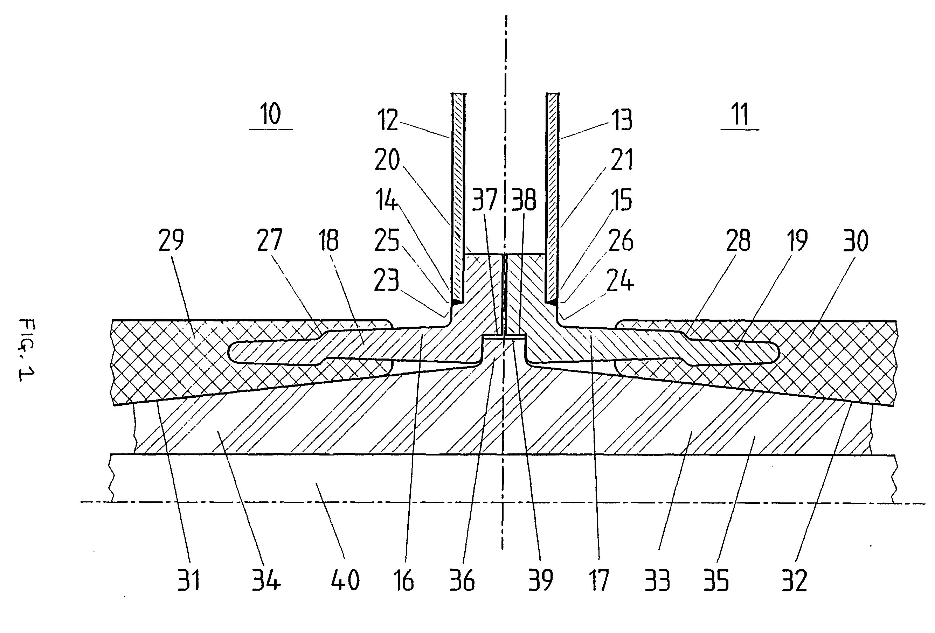

Von zwei nebeneinander aufgestellten Schaltfeldern 10, 11 (Fig. 1) sind lediglich die zugehörigen Schaltfeldwände 12, 13 teilweise dargestellt. Die Schaltfeldwände 12 und 13 besitzen jeweils eine kreisförmige Öffnung 14, 15. In die kreisförmigen Öffnungen 14 und 15 sind metallische Bauelemente 16 und 17 eingesetzt. Die metallischen Bauelemente besitzen einen zylindrischen Abschnitt 18, 19 und einen daran anschließenden radialen Abschnitt 20 und 21. An dem radialen, umlaufenden Abschnitt ist ein Rücksprung 22, 23 abgedreht, der exakt in die Öffnung 14, 15 der jeweiligen Schaltfeldwand 12, 13 hineinpaßt. An diesem Rücksprung 23, 24 ist das Bauelement 16 bzw. 17 an der Schaltfeldwand 12, 13 mittels einer umlaufenden Schweißnaht, die vorzugsweise eine Laserschweißnaht ist, gasdicht fixiert und befestigt.

Die zylinderförmigen Abschnitte 18 und 19, die etwa im mittleren Bereich eine Abkröpfung 27, 28 aufweisen, so daß der freie Endrand der zylindrischen Abschnitte 18, 19 einen geringeren Durchmesser aufweist als der an den radialen Randbord 20 bzw. 21 anschließende Abschnitt, sind in den freien Rand je eines topfförmigen Isolierkörpers 29, 30 in jedem Schaltfeld eingegossen. Ein solcher topfförmiger Isolierkörper ist beispielsweise der topfförmige Isolierkörper 24, 25 der DE 43 12 261 A.

Die Innenfläche 31 bzw. 32 jedes Isolierkörpers 29, 30 ist kegelförmig bzw. konisch sich zum freien Rand hin erweiternd ausgebildet und umgibt einen Dichtungskörper 33, der in das Innere der topfförmigen Isolierkörper 29, 30 eingreift und an die Innenflächen 31, 32 angepaßte Abschnitte 34, 35 aufweist. Im Bereich der Verbindung der beiden Abschnitte 34 und 35 besitzt der Dichtkörper 33 einen radialen umlaufenden Flanschrand 36, der in einen durch Rücksprünge 37 und 38 gebildeten umlaufenden Kanal 39 eingreift und beim Verbinden der beiden Schaltfelder 10, 11 darin festgehalten und verklemmt ist.

Der Isolierkörper 33 umgibt einen Kupplungs- oder Durchführungsbolzen 40, der dem Kupplungsbolzen 42 der DE 43 12 261 A entspricht und der mit den Kontaktstücken 29, 31 der DE 43 12 261 A entsprechenden Kontaktstücken (nicht gezeigt) der Isolierkörper 29, 30 in elektrisch leitender Verbindung steht. Die Kontaktstücke (nicht gezeigt), sind dabei in gleicher Weise in den Topfboden der jeweiligen Isolierkörper 29, 30 eingegossen wie in der DE 43 12 261 A beschrieben.

Die Außenflächen der konischen Bereiche 34, 35 des Dichtkörpers 33 sind mittels einer nicht näher dargestellten Metallisierung versehen, mit der eine Feldsteuerung erzielt wird.

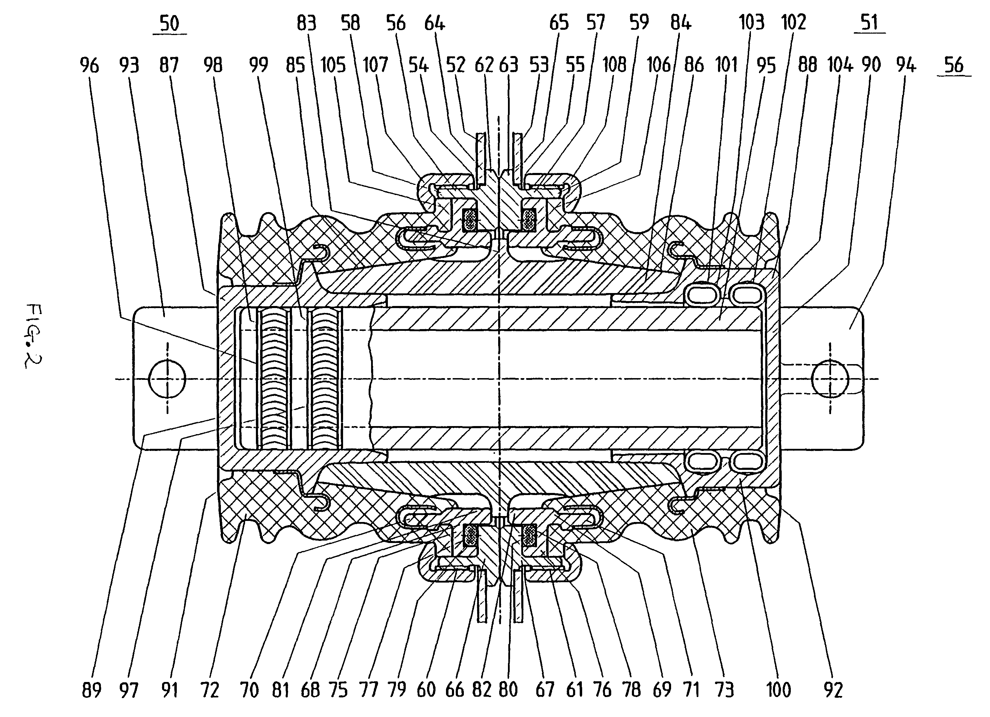

Es sei nun Bezug genommen auf Fig. 2.

Zwei Schaltfelder 50, 51 besitzen benachbarte Wände 52, 53, die dicht nebeneinander angeordnet sind. Die Wände 52 und 53 besitzen eine Öffnung 54 und 55, durch welche die Durchführung oder Kupplung, die in ihrer Gesamtheit mit 56 bezeichnet ist, hindurchgeführt und gehalten ist.

In den Öffnungen 54 und 55 ist je ein Gewindering 56, 57 eingesetzt, der einen zylinderförmigen Abschnitt 58 bzw. 59 mit einem Außengewinde 60, 61 aufweist, an dem ein radialer Flanschabschnitt 62, 63 angeformt ist, der jeweils einen Außendurchmesser aufweist, der größer ist als der Innendurchmesser der Öffnung 54 bzw. 55. Er besitzt weiterhin einen Rücksprung 64 und 65, in den die Wände 52, 53 mit den Öffnungen 54 bzw. 55 hineinpassen. Der Flanschabschnitt 62 und 63 setzt sich radial nach innen in einen Anschlag 66, 67 fort. Innerhalb des Gewinderinges 56, 57 befindet sich ein Bauteil 68, 69, auch Armatur genannt, die mit einem zylindrischen Abschnitt 70 bzw. 71 in den freien Rand eines topfförmigen Isolierkörpers 72, 73 eingreift und darin eingegossen ist. Die Armatur 68 bzw. 69 besitzt dabei einen radial vorspringenden Randbord 75 bzw. 76, deren aufeinanderzuweisende radiale Flächen je eine umlaufende Rille 77, 78 aufweisen, in der eine Dichtung 79, 80 untergebracht ist, die gegen den Abschnitt 66, 67 zum Anliegen kommt. Die Armaturen 68 und 69 besitzten einen dem Abschnitt 70, 71 entgegengesetzt gerichteten zylinderförmigen Vorsprung 81 und 82, die von dem Innenrand des Abschnittes 66 bzw. 67 teilweise umfaßt sind. Zwischen den Vorsprüngen 81 und 82 ist ein umlaufender Bord 83 eines Dichtungskörpers 84 festgelegt, der jeweils in die topfförmigen Isolierkörper 72 und 73 eingreift, wobei zwischen den beiden je eine Konusfläche 85, 86 vorgesehen ist, die eine elektrisch dichte Fuge bildet.

Die beiden Isolierkörper 72 und 73 sind jeweils von einem topfförmigen Kontaktstück 87 und 88 durchgriffen, wobei der Topfboden 89 und 90 jedes Isolierkörpers mit den im Inneren der Schaltfelder 50, 51 befindlichen Stirnflächen 91 und 92 des Isolierkörpers 72 bzw. 73 fluchtet. An der Außenfläche der Topfböden 89 und 90 ist je ein Anschlußstück 93, 94 angeformt, an denen im Inneren der Schaltfelder 50, 51 befindliche Sammelschienen anschließen.

In die Kontakte 87, 88 greift ein Kupplungs- oder Durchführungsrohr 95 mit seinen Enden ein, wobei an dem Ende, welches in den Kontakt 87 eingreift, das Durchführungsrohr 95 zwei umlaufende Rillen 96 und 97 aufweist, in denen ringförmige Spiralfederkontakte eingebracht sind, die die elektrisch leitende Kontaktierung zwischen dem Durchführungsbolzen und dem Topfkontakt 87 herstellen. Der Topfkontakt 88 besitzt an der Innenfläche der zylindrischen Wandung 100 zwei nebeneinanderliegende, umlaufende Rillen 101 und 102, in denen ebenfalls Spiralfederkontakte 103 und 104 eingelegt sind, mit denen die elektrisch leitende Verbindung zwischen dem Durchführungsrohr 95 und dem Topfkontakt 88 hergestellt ist. Dabei könnten die Rillen an beiden Enden des Kupplungsbolzens oder die Rillen in beiden Topfkontakten eingebracht sein.

Jeder der beiden Isolierkörper besitzt an dem Ende, welches den Wänden 52, 53 zugewandt ist, einen radialen, umlaufenden Bordrand 105 und 106, dessen Außendurchmesser dem Außendurchmesser des Abschnittes 75, 76 der Armatur 68, 69 entspricht. Über das Gewinde 60, 61 ist jeweils eine Überwurfmutter 107 und 108 geschraubt, die den Randbord 105 bzw. 106 gegen den Abschnitt 66, 67 andrückt, wodurch der Gewindering 58, 59 mit dem Isolierkörper 72, 73 fest verbunden ist.

## Patentansprüche

1. Sammelschienenkupplung durch die benachbarten Schaltfeldwände zweier nebeneinanderstehender Schaltfelder einer Schaltanlage für Nieder- oder Mittelspannung, mit zwei topfförmigen Isolierkörpern (29, 30), die mit ihrer offenen Seite gegen die Innenfläche der zugehörigen Wand (12, 13) gerichtet sind, mit einem innerhalb der Topfform beider Isolierkörper (29, 30) befindlichen Kupplungsbolzen (40), der mit aus dem jeweiligen Topfboden herausragenden Kontaktstücken in elektrisch leitender Verbindung steht, und mit einem Dichtkörper (33), der den Kupplungsbolzen umschließt,wobei an den nebeneinander befindlichen t Schaltfeldwänden (12, 13) je ein zylindrisches, ins Innere des zugehörigen Schaltfeldes (10, 11) vorspringendes metallisches Bauelement (16, 17) befestigt ist, **dadurch gekennzeichnet**, daß das an der Schaltfeldwand festgeschweißte metallische Bauelement (16, 17) teilweise in den freien Rand des anschließenden topfförmigen Isolierkörpers (29, 30) eingegossen ist.

2. Sammelschienenkupplung nach Anspruch 1, **dadurch gekennzeichnet**, daß der Dichtkörper (33) zwischen den Bauelementen (16, 17) fixiert ist.

3. Sammelschienenkupplung nach einem der Ansprüche 1 und 2, **dadurch gekennzeichnet**, daß jedes Bauelement (16, 17) einen radialen Randbord (20, 21) aufweist, der in einer Öffnung (14, 15) in der zugehörigen Schaltfeldwand (12, 13) fixiert ist.

4. Sammelschienenkupplung nach einem der vorigen Ansprüch, **dadurch gekennzeichnet**, daß die Fixierung des Bauelementes mittels Laserschweißung erfolgt.

5. Sammelschienenkupplung nach einem der vorherigen Ansprüche, **dadurch gekennzeichnet**, daß an den aufeinanderzuweisenden Abschnitten der beiden Bauelemente (16, 17) je ein radialer Rücksprung (37, 38) vorgesehen ist, die beide im montierten Zustand miteinander einen umlaufenden, nach innen offenen Innenkanal (39) bilden, und daß der Randbord (36) in dem Innenkanal (39) festgeklemmt und fixiert ist.

6. Sammelschienenkupplung nach einem der Ansprüche 1 oder 2, **dadurch gekennzeichnet**, daß jedes Bauteil (68, 69) einen radial vorspringenden Randbord (75, 76) aufweist, daß am Isolierkörper (72, 73) ein ebenfalls radial vorspringender Fixierbord (105, 106) angeformt ist, dessen Außendurchmesser dem Außendurchmesser des Randbordes (75, 76) gleicht, daß beide von einem Gewindering (56, 57) mit Außengewinde umfaßt sind, der in eine Öffnung der Schaltfeldwand (52, 53) eingreift und sie außerhalb des Schaltfeldes übergreift, und daß über den Gewindering (56, 57) eine Überwurfmutter (107, 108) geschraubt ist, die den Fixierbord (105, 106) und den Randbord (75, 76) mit dem Gewindering verspannt.

7. Sammelschienenkupplung nach Anspruch 6, **dadurch gekennzeichnet**, daß das Bauteil (68, 69) auf seiner dem Gewindering (56, 57) zugewandten radialen Fläche eine umlaufende Rille (77, 78) aufweist, in der ein Dichtring (79, 80) aufgenommen ist.

8. Sammelschienenkupplung nach einem der Ansprüche 6 und 7, **dadurch gekennzeichnet**, daß als elektrisch leitende Verbindung zwischen dem Kupplungsbolzen (95) und den Kontaktstücken (87, 88) umlaufende Spiralfederkontakte vorgesehen sind.

9. Sammelschienenkupplung nach einem der vorherigen Ansprüche, **dadurch gekennzeichnet**, daß der Kupplungsbolzen als Rohr oder Stange ausgebildet ist.

## Claims

1. Busbar coupling through the adjacent switchbay walls of two switchbays standing beside one another in a switching installation for low or medium voltage, having two pot-shaped insulating elements (29, 30), which are directed with their open side towards the inner face of the associated wall (12, 13), having a coupling bolt (40) that is located inside the pot shape of the two insulating elements (29, 30) and is electrically conductively connected to contact pieces protruding out of the respective pot base, and having a sealing element (33) which encloses the coupling bolt, wherein a cylindrical metallic component (16, 17), which projects into the interior of the associated switchbay (10, 11), is fastened to each of the switchbay walls (12, 13) that are located beside one another **characterized in that** the metallic component (16, 17) that is firmly welded to the switchbay wall is partially cast into the free edge of the adjacent pot-shaped insulating element (29, 30).

2. Busbar coupling according to Claim 1, **characterized in that** the sealing element (33) is fixed between the components (16, 17).

3. Busbar coupling according to one of Claims 1 and 2, **characterized in that** each component (16, 17) has a radial edge flange (20, 21), which is fixed in an opening (14, 15) in the associated switchbay wall (12, 13).

4. Busbar coupling according to one. of the preceding claims, **characterized in that** the fixing of the component is carried out by means of laser welding.

5. Busbar coupling according to one of the preceding claims, **characterized in that**, on the sections pointing towards each other of the two components (16, 17), in each case a radial recess (37, 38) is provided, the two of which form with one another, in the assembled state, a circumferential, inwardly open inner channel (39), and in that the edge flange (36) is clamped fast and fixed in the inner channel (39).

6. Busbar coupling according to one of Claims 1 or 2, **characterized in that** each component (68, 69) has a radially projecting edge flange (75, 76), in that a likewise radially projecting fixing flange (105, 106), whose external diameter is equal to the external diameter of the edge flange (75, 76), is integrally moulded on the insulating element (72, 73), in that both are gripped by a threaded ring (56, 57), having an external thread, which engages in an opening in the switchbay wall (52, 53) and engages over them outside the switchbay, and in that a union nut (107, 108), which braces the fixing flange (105, 106) and the edge flange (75, 76) with the threaded ring, is screwed over the threaded ring (56, 57).

7. Busbar coupling according to Claim 6, **characterized in that** the component (68, 69) has, on its radial face facing the threaded ring (56, 57), a circumferential groove (77, 78) in which a sealing ring (79, 80) is accommodated.

8. Busbar coupling according to one of Claims 6 and 7, **characterized in that** circumferential spiral-spring contacts are provided as the electrically conductive connection between the coupling bolt (95) and the contact pieces (87, 88).

9. Busbar coupling according to one of the preceding claims, **characterized in that** the coupling bolt is constructed as a tube or rod.

## Revendications

1. Système de couplage de barres omnibus à travers les parois adjacentes de deux panneaux de couplage d'une installation de distribution pour basse ou moyenne tension, avec deux éléments isolants (29, 30) en forme de coupelles, dont le côté ouvert est tourné vers la face intérieure de la paroi (12, 13) concernée, avec une tige de couplage (40) disposée à l'intérieur de la forme de coupelle des deux éléments isolants (29, 30), qui est reliée de manière électro-conductrice à des pièces de contact faisant saillie hors de la coupelle concernée, et avec un élément d'étanchéité (33) qui entoure la tige de couplage, un élément de construction (16, 17) métallique cylindrique, qui fait saillie à l'intérieur du panneau de couplage (10, 11) concerné étant fixé à chacune des parois de panneau (12, 13) adjacentes, **caractérisé en ce que** l'élément métallique (16, 17) qui est fixé par soudure à la paroi de panneau de couplage est partiellement noyé dans le bord libre de l'élémént isolant (29, 30) en forme de coupelle adjacent.

2. Système de couplage de barres omnibus selon la revendication 1, **caractérisé en ce que** l'élément d'étanchéité (33) est tenu entre les éléments de construction (16, 17).

3. Système de couplage de barres omnibus selon une des revendications 1 et 2, **caractérisé en ce que** chaque élémen de construction t (16, 17) comporte un collet (20, 21) périphérique radial qui est fixé dans une ouverture (14, 15) dans la paroi (12, 13) concernée de panneau de couplage.

4. Système de couplage de barres omnibus selon une des revendications précédentes, **caractérisé en ce que** la fixation de l'élément de construction est réalisée par soudage au laser.

5. Système de couplage de barres omnibus selon une des revendications précédentes, **caractérisé en ce qu**'il est prévu un retrait (37, 38) radial sur les tronçons en vis-à-vis des deux éléments de construction (16, 17), les retraits formant ensemble, à l'état monté, un canal intérieur (39) ouvert en direction de l'intérieur et en ce que le collet (36) est serré et fixé dans le canal intérieur (39).

6. Système de couplage de barres omnibus selon une des revendications 1 ou 2, **caractérisé en ce que** chaque élément de contsruction (68, 69) comporte un collet (75, 76) périphérique qui fait saillie dans la direction radiale, en ce qu'un collet de fixation (105, 106) faisant également saillie dans la direction radiale est aménagé sur l'élément isolant (72, 73), le diamètre extérieur dudit collet étant égal au diamètre extérieur du collet périphérique (75, 76), en ce que tous deux sont entourés d'une bague filetée (56, 57) pourvue d'un filetage extérieur, qui pénètre dans une ouverture de la paroi (52, 53) de panneau de couplage et dépasse de celle-ci à l'extérieur du panneau de couplage et en ce que sur la bague filetée (56, 57) est vissé un écrou (107, 108) qui serre le collet de fixation (105, 106) et le collet (75, 76) périphérique avec la bague filetée.

7. Système de couplage de barres omnibus selon la revendication 6, **caractérisé en ce que** l'élément de contsruction (68, 69), sur sa face radiale tournée vers la bague filetée (56, 57), comporte une gorge (77, 78) circulaire dans laquelle est monté un joint d'étanchéité (79, 80).

8. Système de couplage de barres omnibus selon une des revendications 6 et 7, **caractérisé en ce qu**'l est prévu comme liaison électro-conductrice entre la tige de couplage (95) et les pièces de contact (87, 88) des contacts à ressort en spirale.

9. Système dé couplage de barres omnibus selon une des revendications précédentes, **caractérisé en ce que** la tige de couplage se présente sous la forme d'un tube ou d'une barre.
